# EUROPÄISCHE PATENTSCHRIFT

(11) **EP 4 117 979 B1**
(45) Veröffentlichungstag und Bekanntmachung des Hinweises auf die Patenterteilung: **07.05.2025**
(21) Anmeldenummer: 21711197.0
(22) Anmeldetag: 08.03.2021
(51) Int. Cl.: B62D 1/181

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 12.03.2020 DE 102020203210
(43) Veröffentlichungstag der Anmeldung: 18.01.2023
(73) Patentinhaber: thyssenkrupp Presta AG, 9492 Eschen (LI); thyssenkrupp AG, 45143 Essen (DE)
(72) Erfinder: HEIGENHAUSER, Benedikt, 3014 Bern (CH); GEIR, Øie, 9008 St. Gallen (CH)
(74) Vertreter: thyssenkrupp Intellectual Property GmbH
(86) Internationale Anmeldenummer: PCT/EP2021/055704
(87) Internationale Veröffentlichungsnummer: WO 2021/180609

(56) Entgegenhaltungen:
- EP-B1- 3 299 253
- DE-A1- 102018 213 679
- JP-A- 2013 129 322
- JP-B2- 4 433 561

## Beschreibung

### Stand der Technik

Die Erfindung betrifft eine motorisch verstellbare Lenksäule für ein Kraftfahrzeug, umfassend eine Manteleinheit, in der eine Lenkspindel um eine Längsachse drehend lagerbar ist, und die einen relativ zu einem Außenmantel in Richtung der Längsachse teleskopierbaren in dem Außenmantel angeordneten Innenmantel aufweist, und einen motorischer Verstellantrieb, der mit dem Innenmantel und dem Außenmantel gekoppelt ist, wobei eine Vorspanneinrichtung vorgesehen ist, die ein an dem Außenmantel abgestütztes, gegen den Innenmantel verspannbares Druckstück aufweist, wobei die Vorspanneinrichtung eine mit dem Druckstück zusammenwirkende Führungseinrichtung aufweist, zur linearen Führung des Innenmantels relativ zum Außenmantel in Richtung der Längsachse, wobei die Führungseinrichtung in Umfangsrichtung wirksame Formschlusselemente aufweist, wobei die Führungselemente eine Gleitschiene und ein darin gleitend geführtes Gleitstück umfassen.

Eine motorisch verstellbare Lenksäule für ein Kraftfahrzeug weist eine in einer Manteleinheit um ihre Längsachse drehbar gelagerte Lenkspindel auf, an deren in Fahrtrichtung hinteren, dem Fahrer zugewandten Ende ein Lenkrad zur Einbringung eines Lenkbefehls durch den Fahrer angebracht ist. Die Manteleinheit wird von einer an der Fahrzeugkarosserie befestigten Trageinheit gehalten, wobei durch eine motorischen Verstellung der Manteleinheit relativ zur Trageinheit die Einstellung der Lenkradposition relativ zur Fahrerposition ermöglicht wird.

Bei einer gattungsgemäßen Lenksäule wird eine motorische Längsverstellung, bei der das Lenkrad in Längsrichtung, d. h. in Richtung der Längsachse relativ zur Fahrerposition nach hinten oder nach vorn motorisch mittels des Verstellantriebs verstellt werden kann, durch eine teleskopartig verstellbare Ausgestaltung der Manteleinheit und der Lenkspindel ermöglicht. Außerdem kann die Lenksäule bei einem Crash in Längsrichtung zusammengeschoben werden, wodurch wirksam verhindert wird, dass die Lenksäule in das Innere der Fahrgastzelle eindringt und zu Verletzungen der Insassen führt.

Die teleskopierbare Manteleinheit umfasst mindestens einen Außenmantel, auch als Außenmantelrohr oder äußeres Mantelrohr bezeichnet, in den ein Innenmantel, auch als Innenmantelrohr oder inneres Mantelrohr bezeichnet, längsverstellbar koaxial eintaucht. Es können auch Mehrfach-Teleskopanordnungen ausgebildet sein, bei denen zwischen Außen- und Innenmantel mindestens ein weiterer Zwischenmantel koaxial angeordnet ist. Um eine möglichst geräuscharme Längsverstellung mit gleichmäßiger Verstellkraft zu ermöglichen und gleichzeitig eine möglichst hohe Steifigkeit der Manteleinheit zu gewährleisten, ist es bekannt, das radiale Spiel und die Reibungskraft zwischen den Mänteln definiert vorzugeben. Hierzu ist in der EP 3 299 253 A1 angegeben, eine zwischen Außen- und Innenmantel wirksame Vorspanneinrichtung vorzusehen. Diese weist ein an dem Außenmantel radial bezüglich der Längsachse abgestütztes, quer zur Längsachse, radial nach innen gegen den Innenmantel verspannbares Druckstück auf. Das Druckstück liegt mit einer Reib- oder Gleitfläche an einer Außenfläche des Innenmantels mit einer Vorspannkraft an, die durch Einstellung der Vorspanneinrichtung vorgebbar ist. Dadurch kann das radiale Spiel im Hinblick auf eine hinreichend leichtgängige Verstellbarkeit bei einer möglichst hohen Steifigkeit optimiert werden.

Es ist weiterhin erforderlich, den Innenmantel gegen Verdrehung zum Außenmantel zu sichern. Hierzu sind im Stand der Technik zusätzlich zu der genannten Vorspanneinrichtung weitere Maßnahmen erforderlich, wodurch der Fertigungs- und Montageaufwand erhöht wird.

Eine Lenksäule der eingangs genannten Art ist beispielsweise aus der JP 4 433561 B2 oder der JP 2013 129322 A bekannt. Dabei weist die Führungseinrichtung als Formschlusselemente Abflachungen auf. Nachteilig daran ist die relativ geringe Belastbarkeit, Steifigkeit und Eigenfrequenz.

Angesichts der vorangehend erläuterten Problematik ist es eine Aufgabe der vorliegenden Erfindung, eine funktional optimierte längsverstellbare Lenksäule mit geringerem Aufwand zu ermöglichen.

### Darstellung der Erfindung

Diese Aufgabe wird erfindungsgemäß gelöst durch die Lenksäule mit den Merkmalen des Anspruchs 1. Vorteilhafte Weiterbildungen ergeben sich aus den Unteransprüchen.

Bei einer motorisch verstellbaren Lenksäule für ein Kraftfahrzeug, umfassend eine Manteleinheit, in der eine Lenkspindel um eine Längsachse drehend lagerbar ist, und die einen relativ zu einem Außenmantel in Richtung der Längsachse teleskopierbaren in dem Außenmantel angeordneten Innenmantel aufweist, und einen motorischer Verstellantrieb, der mit dem Innenmantel und dem Außenmantel gekoppelt ist, wobei mit eine Vorspanneinrichtung vorgesehen ist, die ein an dem Außenmantel abgestütztes, gegen den Innenmantel verspannbares Druckstück aufweist, wobei die Vorspanneinrichtung eine mit dem Druckstück zusammenwirkende Führungseinrichtung aufweist, zur linearen Führung des Innenmantels relativ zum Außenmantel in Richtung der Längsachse, wobei die Führungseinrichtung in Umfangsrichtung wirksame Formschlusselemente aufweist, wobei die Führungselemente eine Gleitschiene und ein darin gleitend geführtes Gleitstück umfassen, ist erfindungsgemäß vorgesehen, dass die Führungselemente eine einstückig durch plastische Umformung in den Innenmantel oder den Außenmantel eingeformte, als sickenförmige Vertiefung ausgebildete Führungsnut und einen darin eingreifenden Führungsvorsprung umfassen.

Die Führungseinrichtung weist in Umfangsrichtung wirksame Formschlusselemente auf. Dazu kann die Vorspanneinrichtung korrespondierende Formschlusselemente aufweisen, welche bevorzugt in radialer Richtung miteinander in Formschlusseingriff bringbar sind, zur Bildung eines in Umfangsrichtung wirksamen Formschlusses. Die Formschlusselemente sind korrespondierend an Innenmantel und Außenmantel angeordnet und ermöglichen eine Sicherung gegen Verdrehung. Vorteilhaft ist, dass derartige Formschlusselemente mit geringem Aufwand bereitgestellt werden können, und eine einfache Montage ermöglichen. Dank der erfindungsgemäßen Integration in die Vorspanneinrichtung ist keine separate Verdrehsicherung mehr erforderlich, und es ist möglich, die Vorspannkraft auf die Formschlusselemente auszuüben, um diese mit definiertem Spiel bzw. definierter Kraft im Formschlusseingriff zu halten.

Die Führungselemente umfassen eine Führungsnut und einen darin eingreifenden Führungsvorsprung. Die Führungsnut hat einen radial offenen Nutquerschnitt, und erstreckt sich in Längsrichtung, beispielsweise außen an dem Innenmantel oder innen an der dem Innenmantel zuggewandten Innenseite des Druckstücks. Dabei kann sich die Führungsnut über einen längeren Abschnitt in Längsrichtung erstrecken, beispielsweise in einer Führungsschiene, oder auch mit relativ kurzer Abmessung in Längsrichtung, beispielsweise an einem Gleitstück. Der Führungsvorsprung hat bevorzugt einen Querschnitt, der derart auf den Nutquerschnitt abgestimmt ist, dass ein in Umfangsrichtung wirksamer Formschluss gebildet wird. Ein Führungsvorsprung kann einen längs langgestreckten Steg umfassen, oder auch einen kurzen, nockenartigen Ansatz. Es kann eine Führungsnut am Innenmantel angeordnet sein, und ein korrespondierender Führungsvorsprung am Druckstück, oder umgekehrt. Es sind auch Kombinationen von Führungsnuten und/oder Führungsvorsprüngen an Innenmantel und Druckstück möglich. Bei der erfindungsgemäßen Anordnung kann der Führungsvorsprung mit der durch die Vorspanneinrichtung ausgeübten Vorspannkraft radial in den offenen Nutquerschnitt gepresst und dadurch in der Führungsnut verspannt werden.

Erfindungsgemäß ist vorgesehen, dass ein Führungselement einstückig durch plastische Umformung in den Innenmantel oder den Außenmantel eingeformt ist. Beispielsweise kann eine Führungsnut parallel zur Längsachse einstückig in den Außenumfang des Innenmantels eingeformt sein, beispielsweise durch spanlose plastische Umformverfahren wie Pressen oder Rollieren. In einen metallischen Innenmantel, der vorzugsweise aus Stahlblechprofil gefertigt sein kann, kann eine Führungsnut rationell mittels Kaltumformung eingebracht werden. Die Führungsnut ist entsprechend als sickenförmige Vertiefung ausgebildet. Besonders vorteilhaft ist es dabei, dass die Führungsnut, insbesondere die sickenförmige Vertiefung, durchgehend ausgebildet ist und der Innenmantel oder der Außenmantel im Bereich der Vertiefung keine Durchbrechungen, Öffnungen, Löcher oder dergleichen aufweist. Mit anderen Worten geht die Wandung des Innen- oder Außenmantels im Bereich der Sickenförmigen Vertiefung in Umfangsrichtung unterbrechungsfrei durch. Dadurch wird die Steifigkeit und Stabilität der Anordnung erhöht. Ein Führungsvorsprung oder -steg kann ebenfalls einstückig angeformt sein. Durch die einstückige Ausführung kann die Anzahl der Teile reduziert, die Steifigkeit optimiert und die Fertigung und Montage vereinfacht werden. Eine einstückige Ausbildung eines Führungselements mit dem Druckstück ist ebenfalls möglich.

Bei der Erfindung ist eine lineare Führungseinrichtung mit der Vorspanneinrichtung integriert ausgebildet. Dies kann dadurch realisiert werden, dass das Druckstück, welches im Stand der Technik ein reines Spannelement ist, eine zusätzliche Führungsfunktion erhält. Durch die Führungsfunktion kann die relative Bewegung von Innen- und Außenmantel im Sinne einer Zwangsführung definiert vorgegeben werden, so dass eine lineare, teleskopartige Verstellung in Längsrichtung möglich ist, wobei eine unerwünschte relative Verdrehung zwischen Innen- und Außenmantel jedoch auf ein maximal akzeptables Winkelspiel eingeschränkt oder weitgehend unterdrückt wird.

Ein Vorteil der Erfindung ist, dass die Vorspanneinrichtung mit geringem Aufwand mit der erfindungsgemäßen Führungsfunktion ausgestaltet werden kann, wobei lediglich eine Anpassung des Druckstücks an eine damit zusammenwirkende lineare Führung erforderlich ist, welche ebenfalls mit geringem fertigungstechnischen Aufwand bereitgestellt werden kann. Die lineare Führung bildet eine Art Zwangsführung, welche eine relative Bewegung des Druckstücks relativ zum Innenmantel im Wesentlichen auf die Längsrichtung einschränkt.

Ein weiterer Vorteil ist, dass der Aufwand zur Montage und Justierung der Lenksäule nicht höher ist, als bei der im Stand der Technik bekannten Vorspanneinrichtung, dabei jedoch geringer ist, als wenn eine zusätzliche Führungseinrichtung vorgesehen wäre.

Durch die erfindungsgemäß vereinfachte Integration von Vorspann- und Führungsfunktion können darüber hinaus Gewicht und Kosten eingespart werden.

Durch die erfindungsgemäße Kombination der Vorspann- und Führungsfunktion kann eine außerdem eine höhere Steifigkeit der Manteleinheit realisiert werden, insbesondere im Hinblick auf eine hohe Torsionssteifigkeit.

Der motorische Verstellantrieb ist mit dem Innenmantel und dem Außenmantel verbunden. Zur Verstellung der Lenksäule ist ein motorischer Verstellantrieb vorgesehen, der mit Innen- und Außenmantel gekoppelt ist, um diese motorisch in Richtung der Längsachse relativ zueinander zu verstellen, d.h. die Lenksäule teleskopierend ein- oder auszufahren. Der Verstellantrieb kann einen Spindeltrieb umfassen, mit einer auf einer Gewindespindel angeordneten Spindelmutter, und einem Antriebsmotor, von dem die Gewindespindel und die Spindelmutter relativ zueinander drehend antreibbar sind. Dabei ist die Spindelmutter an dem Innen- oder Außenmantel, in Richtung der Längsachse unverschieblich angebracht, und die Gewindespindel an dem jeweils dazu teleskopierbaren anderen Mantel, also dem Außen- oder Innenmantel. Von einem elektrischen Stellmotor wird über ein geeignetes Getriebe, beispielsweise ein Schnecken- oder Riemengetriebe, die Spindelmutter oder die Gewindespindel drehend angetrieben, wodurch die relativ dazu bezüglich der Drehung feststehende Gewindespindel oder Spindelmutter translatorisch in Richtung der Spindellängsachse bewegt wird, und je nach relativer Drehrichtung der Innenmantel relativ zum Außenmantel in Längsrichtung ein- oder ausfährt.

Die erfindungsgemäße Ausführung ist für eine motorisch verstellbare Lenksäule besonders gut geeignet, da die von dem Verstellantrieb beim Verstellen zu überwindende Verstellkraft genau und dauerhaft vorgebbar ist, und gleichzeitig eine besonders kompakte und konstruktiv einfache Bauweise ermöglicht wird.

Es kann mit Vorteil vorgesehen sein, dass die Führungseinrichtung ein erstes Führungselement am Innenmantel aufweist, und ein damit korrespondierendes zweites Führungselement an dem Druckstück, welches an dem ersten Führungselement in Richtung der Längsachse bewegbar geführt ist. Jeweils eines der Führungselemente kann sich in Längsrichtung erstrecken, beispielsweise als langgestrecktes Formschlusselement an dem Innenmantel. Das andere Führungselement ist an dem Druckstück angeordnet, so dass es sich in Führungseingriff mit besagtem ersten Führungselement befindet. Vorzugsweise umfassen die Führungselemente miteinander korrespondierende Formschlusselemente am Druckstück und am Innenmantel, welche eine linear geführte relative Bewegung in Längsrichtung ermöglichen, und durch den formschlüssigen Eingriff in Umfangsrichtung eine relative Drehung zu blockieren. Durch die erfindungsgemäße Integration in die Vorspanneinrichtung können die Führungselemente mit der Vorspannkraft beaufschlagt und dadurch im Formschlusseingriff miteinander verspannt werden. Dadurch erhalten die Formschlusselemente eine vorteilhafte doppelte Funktion, nämlich zur Vorspannung und zur Führung.

Eine vorteilhafte Ausführung ist, dass die Führungselemente eine Gleitschiene und ein darin gleitend geführtes Gleitstück umfassen. Eine Gleitschiene ist in Richtung der Längsachse langgestreckt ausgebildet, beispielsweise als Führungselement am Innenmantel. Die Gleitschiene hat einen Querschnitt quer zur Längsachse, der mit dem Querschnitt des Gleitstücks formschlüssig korrespondiert, welches als Führungselement am Druckstück ausgebildet sein kann. Die Gleitschiene und das Gleitstück bilden relativ zueinander in Längsrichtung gleitend bewegbare Formschlusselemente, wie vorangehend beschrieben. Diese können durch formgebende Verfahren mit geringem Fertigungsaufwand bereitgestellt werden, sind einfach montierbar und ermöglichen einen langlebigen, zuverlässigen und wartungsarmen Betrieb.

Eine vorteilhafte Weiterbildung ist, dass die Führungselemente korrespondierende, quer zur Längsachse keilförmig zusammenlaufende Seitenflanken aufweisen. Durch die Vorspanneinrichtung werden die Führungselemente in Richtung der zusammenlaufenden Keilflächen, als in Keilrichtung, gegeneinander vorgespannt. Dadurch kann eine Keilführung realisiert werden, die über die Keilflächen bereits bei relativ kleiner Vorspannkraft eine sichere und spielarme bzw. spielfreie Einstellung der Führungseinrichtung ermöglicht. Bevorzugt können die Seitenflanken in einer Führungsnut mit im Wesentlichen V-förmigen oder trapezförmigen Querschnitt ausgebildet sein. Diese begrenzen das Winkelspiel eines darin formschlüssig eingreifenden Führungsvorsprungs in Umfangsrichtung. Der Führungsvorsprung kann ebenfalls einen V- oder trapezförmigen, an den Nutquerschnitt angepassten Querschnitt haben. Alternativ kann der Führungsvorsprung einen bogenförmig gerundeten Querschnitt haben, der im Linienkontakt an den keilförmigen Seitenflanken anliegt. Auf diese Weise kann durch die Gestaltung der Querschnitte eine optimierte Gleitführung realisiert sein. Ein weiterer Vorteil der keilförmigen Seitenflanken ist, dass eine selbstständige Ausrichtung und Positionierung des Druckstücks in der Führungseinrichtung erfolgen kann, wenn dieses mit der Vorspannkraft in Richtung der zusammenlaufenden Keilflächen gegen das korrespondierende Führungselement vorgespannt und angepresst wird. In einer vorteilhaften Weiterbildung kann es vorgesehen sein, dass der Nutquerschnitt ein gotisches Profil aufweist. Dadurch kann, insbesondere mit einem gerundeten Querschnitt des Führungsvorsprungs die wirksame Flächenpressung reduziert werden und somit der Verschleiß reduziert werden.

Durch den optimierten Kraftschluss der Keilflächen kann in vorteilhafter Weise eine hohe Torsionssteifigkeit der Manteleinheit realisiert werden.

Keilförmige Seitenflanken können zudem rationell mittels plastischer Umformung einstückig erzeugt werden, beispielsweise durch Einbringen einer Führungsnut mittels Kaltumformung in einen bevorzugt aus Stahl gefertigten Innenmantel.

Durch die Form und die relativen Abmessungen der Führungselemente - beispielsweise einer Führungsnut und eines darin eingreifenden Führungsvorsprungs - kann das Winkelspiel, um das der Innenmantel relativ zum Außenmantel verdrehbar ist, definiert vorgegeben werden. Bevorzugt beträgt das Winkelspiel weniger als 10°, besonders bevorzugt weniger als 2°, oder es erfolgt eine spielfreie Einstellung, entsprechend 0° Winkelspiel.

Es kann vorgesehen sein, dass die Führungseinrichtung zumindest teilweise reibungsmindernd ausgestaltet ist. Bei einer Gleitführung der Führungseinrichtung können bevorzugt zumindest die aufeinander gleitenden Gleitflächen, beispielsweise von Gleitstück und/oder Gleitschiene eine gut gleitfähige, reibungsarme Materialpaarung aufweisen. Dadurch ist auch bei einer höheren Vorspannkraft, die eine höhere Steifigkeit ermöglicht, eine relativ leichtgängige Verstellung gewährleistet. Beispielsweise kann mindestens eine Gleitfläche zumindest teilweise aus einem Kunststoff wie Polytetraflourethylen (PTFE) ausgebildet sein oder eine Beschichtung aufweisen. Die reibungsmindernde Ausgestaltung kann auch mittels Wälzkörpern erfolgen, die zwischen dem zumindest einen Führungselement und dem Druckstück angeordnet sind. Bevorzugt sind die Wälzkörper an dem Druckstück gehaltert und wälzen auf dem zumindest einen Führungselement ab.

In einer vorteilhaften Weiterbildung kann es vorgesehen sein, dass das Druckstück aus einem Kunststoff gebildet ist oder einen solchen umfasst.

In einer Ausführungsvariante kann das Druckstück aus einen metallischen Werkstoff wie Stahl, einer Aluminiumlegierung, einer Messinglegierung oder einer Zamaklegierung gebildet sein oder eine solchen umfassen. In einer besonders bevorzugten Ausführungsform kann die mit dem zumindest einen Führungselement in Kontakt stehende Fläche des Druckstücks mit einem Kunststoff umspritzt sein oder mit einer Gleitfolie versehen sein. Dadurch können die tribologischen Eigenschaften weiter verbessert werden.

Es ist möglich, dass die Vorspanneinrichtung einstellbar ist. Zur Einstellung der Kraft oder des Spiels zwischen den Führungselementen kann ein einstellbares Vorspannelement vorgesehen sein, beispielsweise mit einer Einstellschraube oder dergleichen. Dadurch kann das Druckstück relativ zum Außenmantel in Richtung der Vorspannkraft radial verstellt werden, um das das Spiel zwischen den Führungselementen einzustellen, und/oder die über das Druckstück auf die Führungselemente ausgeübte Vorspannkraft. Die Einstellbarkeit ermöglicht die Justierung und Angleichung der Vorspannkraft und damit der Verstellkraft der Lenksäule.

Eine vorteilhafte Ausführung kann vorsehen, dass die Vorspanneinrichtung in einer vorgegebenen Einstellposition festlegbar ist. Dadurch kann bei der Fertigung eine optimale, dauerhafte und nachträglich nicht mehr veränderbare Werkseinstellung der Verstellkraft erfolgen, im Sinne einer einmaligen Kalibrierung innerhalb einer vorgegebenen Toleranz. Beispielsweise kann ein Einstellelement wie eine Einstellschraube durch partielle plastische Verformung und/oder stoffschlüssige Verbindung bei einem vorgegebenen, eingestellten Spiel oder einer Vorspannkraft unlösbar fixiert werden.

Es ist möglich, dass die Vorspanneinrichtung ein Federelement aufweist. Das Federelement kann gegen das Druckstück vorgespannt werden, so dass es durch seine Elastizität die Vorspannkraft dauerhaft aufrecht erhält. Das Federelement kann dazu zwischen Druckstück und Außenmantel angeordnet sein, um das Druckstück radial von außen elastisch gegen den Innenmantel zu belasten. Dadurch können Toleranzen, auch durch wechselnde Betriebsbedingungen wie Temperaturschwankungen oder dergleichen ausgeglichen werden. Ein Federelement kann bevorzugt mit einer einstellbaren Vorspanneinrichtung kombiniert werden.

Es kann vorteilhaft sein, dass der Innenmantel in dem Außenmantel an der Vorspanneinrichtung durch das Druckstück, und an zwei weiteren, jeweils in Umfangsrichtung vom Druckstück und voneinander beabstandeten Umfangsbereichen radial abgestützt ist. Hierzu können innerhalb des Außenmantels auf dem Innenumfang in Umfangsrichtung von dem Druckstück beabstandet zwei radial nach innen vorspringende Gleitflächen ausgebildet sein, die relativ zueinander Abstand in Umfangsrichtung haben, und dem Druckstück bezüglich der Längsachse gegenüberliegen. Dadurch wird im Querschnitt eine definierte, stabile Dreipunktlagerung gebildet, welche eine optimierte, spielfreie Lagerung des Innenmantels ermöglicht.

Die Manteleinheit bildet mit der darin gelagerten Lenkspindel eine Stelleinheit. Diese kann in einer mit einer Fahrzeugkarosserie verbindbaren Trageinheit gehalten sein. Dabei kann vorgesehen sein, dass die Stelleinheit an der Trageinheit um eine quer zur Längsachse, horizontal liegende Schwenkachse höhenverschwenkbar gelagert ist. Durch die Verschwenkung um eine derartige Schwenkachse kann eine Höhenverstellung realisiert werden, bei der das am hinteren Ende der Lenkspindel angebrachte Lenkrad in der Höhe relativ zur Fahrerposition eingestellt werden kann.

Die Höhenverstellung kann manuell erfolgen. Insbesondere zum automatisierten Verstauen der Lenksäule beim autonomen Fahren ist es vorteilhaft, dass ein elektrischer Höhen-Verstellantrieb mit der Trageinheit und der Stelleinheit verbunden ist, von dem die Stelleinheit relativ zur Trageinheit um die Schwenkachse bewegbar ist. Der Höhen-Verstellantrieb ist an sich ebenfalls bekannt und kann beispielsweise als elektromotorisch angetriebener Spindeltrieb realisiert werden, wie vorangehend für die Längsverstellung beschrieben.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Darstellung schräg von oben,
- Figur 2: die Lenksäule gemäß Figur 1 in einer Ansicht schräg von unten,
- Figur 3: einen Längsschnitt durch die Lenksäule gemäß Figur 1 bis 2,
- Figur 4: einen Querschnitt durch die Lenksäule gemäß Figur 1 bis 3,
- Figur 5: eine Teilansicht eines Querschnitts wie in Figur 4 einer zweiten Ausführungsform,
- Figur 6: eine Teilansicht eines Querschnitts wie in Figur 4 einer dritten Ausführungsform.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

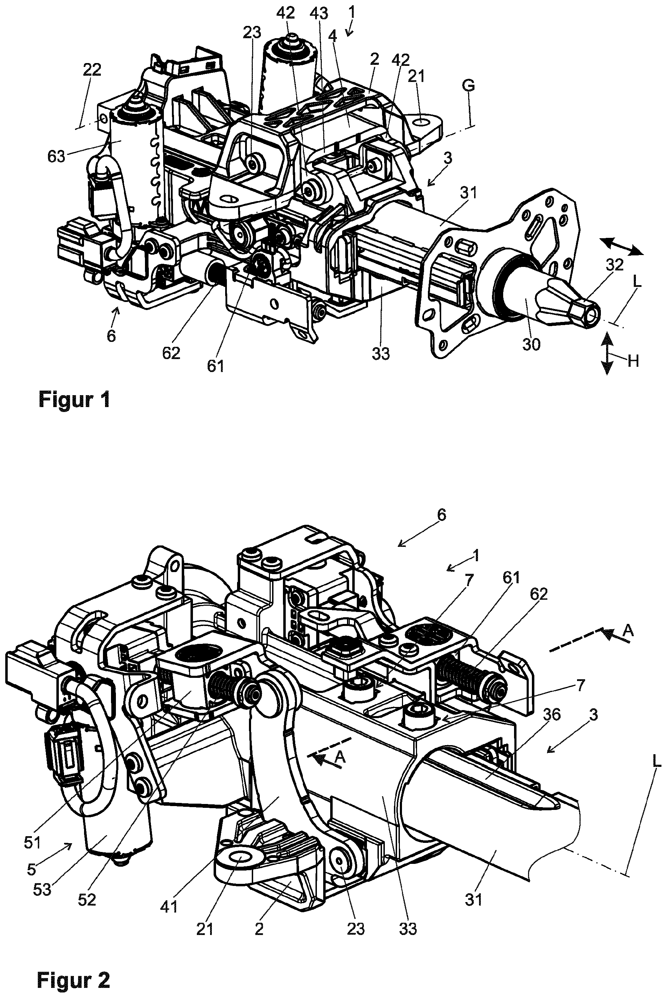

Eine erfindungsgemäße Lenksäule 1 ist schematisch in perspektivischer Ansicht jeweils von hinten (bezogen auf die Fahrtrichtung eines nicht gezeigten Kraftfahrzeugs) in Figur 1 von oben und in Figur 2 von unten dargestellt.

Die Lenksäule 1 kann an der Karosserie eines nicht dargestellten Kraftfahrzeugs mittels einer Trageinheit 2 befestigt werden, auch als Konsole bezeichnet. Die Trageinheit 2 umfasst zur Verbindung mit der Karosserie Befestigungsmittel 21, beispielsweise Befestigungsöffnungen, durch die nicht dargestellte Befestigungselemente wie Schrauben hindurchgeführt werden können.

In einer Manteleinheit 3 ist eine Lenkspindel 30 in einem Innenmantel 31, auch als Innenmantelrohr, oberes oder inneres Mantelrohr bezeichnet, um ihre Längsachse L, die sich in Längsrichtung nach vorn erstreckt, drehbar gelagert. Hinten an der Lenkspindel 30 ist ein Befestigungsabschnitt 32 zur Befestigung eines nicht dargestellten Lenkrads ausgebildet.

Der Innenmantel 31 ist in einem Außenmantel 33, auch als Außenmantelrohr, äußeres oder unteres Mantelrohr bezeichnet, in Längsrichtung, d.h. in Richtung der Längsachse L teleskopartig verschiebbar gehaltert, wie mit dem Doppelpfeil angedeutet ist.

Zwischen dem Innenmantel 31 und dem Außenmantel 33 kann wirkmäßig eine Energieabsorptionseinrichtung vorgesehen sein, die zumindest ein Deformationselement aufweist, welches im Fall eines Fahrzeugcrashs plastisch deformiert wird. Solche Vorrichtungen sind dem Fachmann aus dem Stand der Technik hinreichend bekannt.

Zur Höhenverstellung ist die Manteleinheit 3 um eine im unteren bzw. bezüglich der Fahrrichtung vorderen Bereich liegende, horizontale Höhenverstellachse 22 verschwenkbar, so dass ein hinten bzw. oben am Befestigungsabschnitt 32 angebrachtes Lenkrad in Höhenrichtung H nach oben oder unten verstellbar ist, wie in Figur 1 mit dem Doppelpfeil angedeutet.

Ein Höhenverstellhebel 4 ist an der Trageinheit 2 um eine horizontal, quer zu Längsachse L liegende Hebelachse 23 drehbar gelagert. An einem eingangsseitigen Hebelarm 41 greift ein motorischer Verstellantrieb 5 an, der als Rotationsspindeltrieb ausgebildet ist, mit einer Spindelmutter 51, die mittels eines Verbindungsbolzens 54 mit dem freien Ende des Hebelarms 41 verbunden ist. In die Spindelmutter 51 greift eine Gewindespindel 52 ein, die von einer elektromotorischen Antriebseinheit 53 drehend antreibbar ist. Die Antriebseinheit 53 stützt sich in Richtung der Längsachse L an der Manteleinheit 33 ab. Durch eine motorisch angetriebene Rotation der Gewindespindel 52 wird die Spindelmutter 51 translatorisch relativ zur Manteleinheit 33 bewegt, wie mit dem Doppelpfeil angedeutet ist, wodurch der Höhenverstellhebel 4 um die Höhenverstellachse 23 verschwenkt wird.

Zur Längsverstellung ist ein motorischer Verstellantrieb 6 vorgesehen, der im gezeigten Beispiel als Rotationsspindeltrieb ausgebildet ist, mit einer Spindelmutter 61, in die eine Gewindespindel 62 eingeschraubt ist, die relativ zur Spindelmutter 61 von einer motorischen Antriebseinheit 63 drehend antreibbar ist. Dadurch, dass sich die Gewindespindel 62 in Richtung der Längsachse L, d.h. in Längsrichtung an dem Außenmantel 33 abstützt, und die Spindelmutter 61 an dem Innenmantel 31, kann dieser durch eine entsprechende Ansteuerung der Antriebseinheit 63 in Längsrichtung teleskopierend relativ zur Manteleinheit 33 verstellt werden.

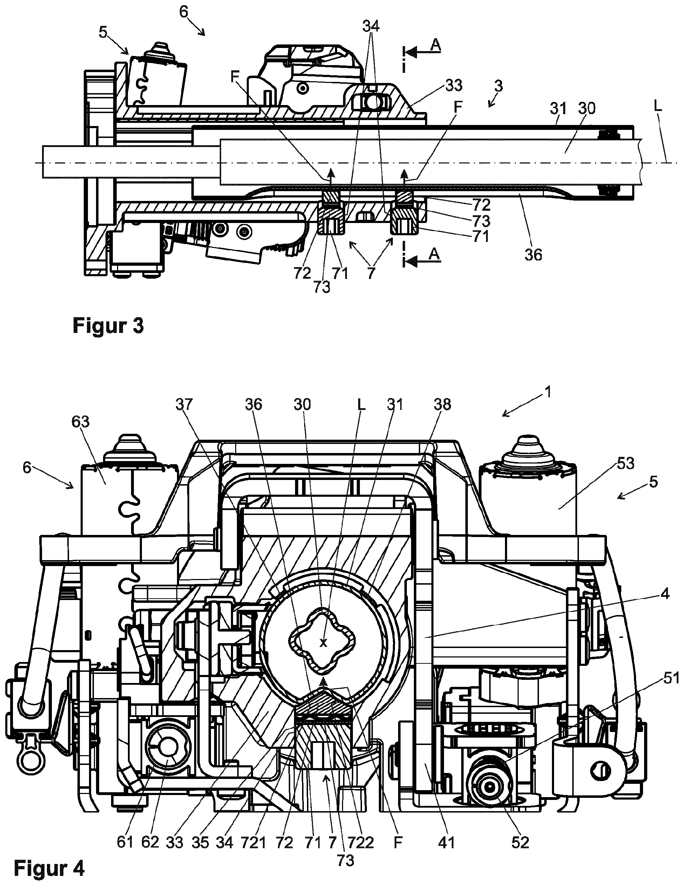

In der Ansicht von Figur 2 ist eine erfindungsgemäße Vorspanneinrichtung 7 erkennbar, die im Bereich der Unterseite des Außenmantels 33 angeordnet ist. Die Vorspanneinrichtung 7 ist im Detail im Längsschnitt entlang der Längsachse L in Figur 3 gezeigt ist, sowie in dem Querschnitt A-A aus Figur 3, der in Figur 4 vergrößert dargestellt ist.

Wie in Figur 3 erkennbar sind zwei Vorspanneinrichtungen 7 mit Abstand in Längsrichtung zueinander an der Manteleinheit 3 angeordnet, die im Wesentlichen gleichartig aufgebaut sind, so dass die im Folgenden beschriebenen Merkmale für jede Vorspanneinrichtung 7 zutreffen.

Die Vorspanneinrichtung 7 weist als einstellbares Vorspannelement eine Einstellschraube 71 auf, die in ein Innengewinde 34 in einer radialen, auf die Längsachse L gerichteten Bohrung 35 eingeschraubt ist. Auf der radial nach innen gerichteten Stirnseite ist an der Einstellschraube 71 ein Druckstück 72 angeordnet. Das Druckstück 72 ist in der Bohrung 35 in radialer Richtung, auf die Außenseite des Innenmantels 31 zu bewegbar, und in Umfangsrichtung und in Längsrichtung formschlüssig an dem Außenmantel 33 abgestützt.

Zwischen der Einstellschraube 71 und dem Druckstück 72 ist ein Federelement 73 angeordnet, nämlich eine in radialer Richtung elastisch verformbare Druckfeder, beispielsweise eine konische oder gewellte Federscheibe. Es ist ebenfalls denkbar und möglich, andere Federausführungen wie Tellerfedern oder Spiralfedern zu verwenden.

Das Druckstück 72 weist auf seiner der Einstellschraube 71 nach innen abgewandten Innenseite einen Führungsvorsprung mit zwei radial nach innen keilförmig zusammenlaufenden Seitenflanken 721 und 722 auf. Die Seitenflanken 721 und 722 verlaufen jeweils parallel zur Längsachse L, und begrenzen einen im Keilwinkel zusammenlaufenden, prismenförmigen Querschnitt, der quer zur Längsachse L ausgerichtet ist, mit anderen Worten weist die Spitze des Keils radial nach innen.

In den Innenmantel 31 ist eine parallel zur Längsachse L langgestreckte Führungsnut 36 eingeformt, bevorzugt durch Kaltumformung in den vorzugsweise aus Stahl gefertigten Innenmantel 31 eingepresst und ist somit sickenartig ausgebildet. Das Druckstück 72 taucht radial mit seinem keilförmigen Querschnitt in die Führungsnut 36 ein.

Die Führungsnut 36 hat einen V-förmigen Nutquerschnitt, an den das Druckstück 72 angepasst ist, so dass dessen Seitenflanken 721 und 722 an den V-förmig zusammenlaufenden Innenseiten der Führungsnut 36 anliegen, wie in Figur 4 erkennbar ist.

Durch Einschrauben kann die Einstellschraube 71 radial in Richtung auf die Längsachse L zu bewegt werden, wobei das Druckstück 72 über das Federelement 73 mit einer Vorspannkraft F radial von außen in die Führungsnut 36 gepresst wird.

Das Druckstück 72 greift formschlüssig in die Führungsnut 36 ein, wobei die keilförmig angeordneten Seitenflanken 721 und 722 in Längsrichtung gleitend an den Innenseiten der Führungsnut 36 geführt sind. Die Führungsnut 36 hat folglich die Funktion einer langgestreckten Gleitschiene, in der das Druckstück 72 als Gleitstück geführt entlanggleiten kann.

Dadurch, dass die Seitenflanken 721 und 722 durch das Federelement 73 spielfrei federbelastet in der Führungsnut 36 anliegen, wird ein in Umfangrichtung wirksamer Formschluss zwischen dem Druckstück 72 und dem Innenmantel 31 gebildet, dessen Winkelspiel durch die elastische Vorspannung auf null eigestellt werden kann. Das in Umfangsrichtung am Außenmantel 33 abgestützte Druckstück 72 bewirkt somit eine praktisch spielfreie Verdrehsicherung des Innenmantels 31 im Außenmantel 33.

Durch die Ein- oder Ausschrauben der Einstellschraube 71 kann die radiale Vorspannkraft F eingestellt werden, mit der das Druckstück 72 in der Führungsnut 36 vorgespannt wird. Dadurch kann die Reibungskraft eingestellt und mit geringen Toleranzen vorgegeben werden, die als Verstellkraft von dem Verstellantrieb 6 zur teleskopierenden Längenverstellung des Innenmantels 31 relativ zum Außenmantel 33 überwunden werden muss. Dabei wird durch die den erfindungsgemäßen, in Umfangsrichtung wirkenden Formschluss eine lineare Führungseinrichtung in Längsrichtung realisiert, durch die eine Verdrehung zwischen Innenmantel 31 und Außenmantel 33 verhindert wird. Mit anderen Worten wird durch die Erfindung eine integrierte Vorspann-Führungseinrichtung realisiert, welche die beiden Funktionen der Vorspannung und der Führung vereinigt.

Die gegeneinander im Gleitkontakt anliegenden Oberflächen der Seitenflanken 721 und 722 und/oder die Innenseiten der Führungsnut 36 können bevorzugt reibungsmindernd ausgestaltet sein, beispielsweise durch eine zumindest teilweise, zumindest einseitige Beschichtung mit einem gut gleitfähigen Kunststoff wie Polytetrafluorethylen (PTFE) oder dergleichen. Dadurch kann die Vorspannkraft F relativ hoch vorgegeben werden, ohne die Verstellung zu beeinträchtigen, und die Steifigkeit der Manteleinheit 3 kann in vorteilhafter Weise erhöht werden. Dabei ist es weiter vorteilhaft, dass durch die erfindungsgemäße Vereinigung von Vorspannung und Führung insbesondere auch die Torsionssteifigkeit der Manteleinheit 33 erhöht wird.

Innerhalb des Außenmantels 33 können auf dem Innenumfang in Umfangsrichtung von dem Druckstück 72 beabstandet radial nach innen vorspringende Gleitflächen 37 und 38 ausgebildet sein, der relativ zueinander Abstand in Umfangsrichtung haben, und dem Druckstück 72 bezüglich der Längsachse L gegenüberliegen. Zwischen den Gleitflächen 37 und 38 und dem Druckstück 72 ist der Innenmantel 31 in einer Dreipunktlagerung definiert eingespannt.

Wie in Figur 3 erkennbar, sin vorzugsweise zwei Vorspanneinrichtungen 7 mit Abstand in Längsrichtung angeordnet. Dadurch wird kann eine vorteilhaft hohe Biegesteifigkeit und Eigenfrequenz der Manteleinheit realisiert werden.

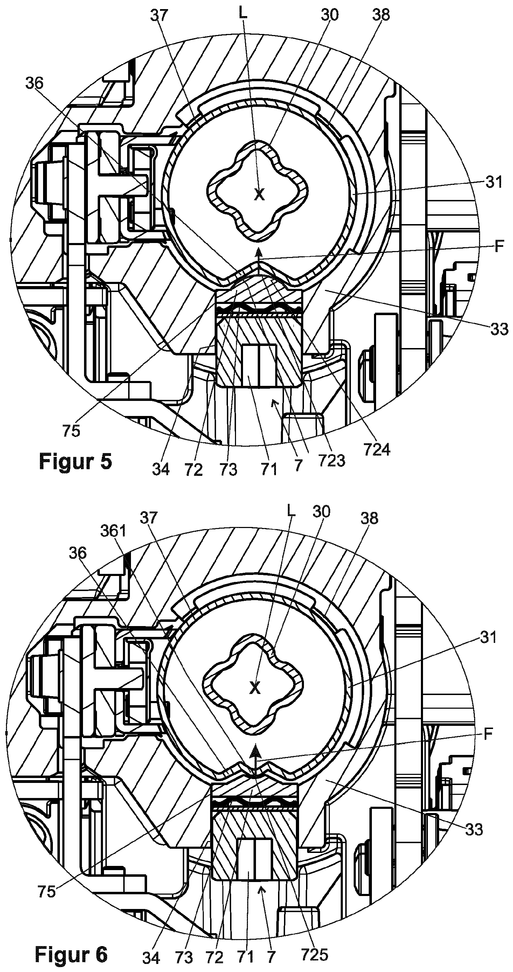

In Figur 5 ist in der Querschnittansicht wie in Figur 4 eine zweite Ausführung vergrößert dargestellt. Diese unterscheidet sich lediglich in der Ausgestaltung des Druckstücks 72. Dieses hat anstelle der beiden gewinkelten, ebenen Seitenflanken 721, 722 eine im Querschnitt konvex gerundete Lagerfläche 723, welche als Führungsvorsprung in den Nutquerschnitt der Führungsnut 36 eintaucht. Die gerundete Lagerfläche 723 liegt in zwei Linienkontakten 724 in der Führungsnut 36 an, wodurch ebenfalls ein Formschluss in Umfangsrichtung erzeugt wird.

Figur 6 zeigt in derselben Ansicht wie Figur 5 eine dritte Ausführung, wobei das Druckstück 72 und die Führungsnut modifiziert sind. Dabei weist das Druckstück 72 eine Führungsnut 725 auf, in die ein radial nach außen vorstehender Führungssteg 361 formschlüssig eingreift, der im Querschnitt der Führungsnut 36 ausgebildet ist. Dadurch wird der in Umfangsrichtung wirksame Formschluss gebildet.

### Bezugszeichenliste

- 1: Lenksäule
- 2: Trageinheit
- 21: Befestigungsmittel
- 22: Höhenverstellachse
- 23: Hebelachse
- 3: Manteleinheit
- 30: Lenkspindel
- 31: Innenmantel
- 32: Befestigungsabschnitt
- 33: Außenmantel
- 34: Innengewinde
- 35: Bohrung
- 36: Führungsnut
- 361: Führungssteg
- 37,38: Gleitfläche
- 5, 6: Verstellantrieb
- 51, 61: Spindelmutter
- 52, 62: Gewindespindel
- 53, 63: Antriebseinheit
- 7: Vorspanneinrichtung
- 71: Einstellschraube
- 72: Druckstück
- 721: Seitenflanke
- 722: Seitenflanke
- 723: Lagerfläche
- 724: Linienkontakte
- 725: Führungsnut
- 73: Federelement

- L: Längsachse
- F: Vorspannkraft

## Patentansprüche

1. Motorisch verstellbare Lenksäule (1) für ein Kraftfahrzeug, umfassend eine Manteleinheit (3), in der eine Lenkspindel (30) um eine Längsachse (L) drehend lagerbar ist, und die einen relativ zu einem Außenmantel (33) in Richtung der Längsachse (L) teleskopierbaren in dem Außenmantel (33) angeordneten Innenmantel (31) aufweist, und einen motorischen Verstellantrieb (6), der mit dem Innenmantel (31) und dem Außenmantel (33) gekoppelt ist,
wobei eine Vorspanneinrichtung (7) vorgesehen ist, die ein an dem Außenmantel (33) abgestütztes, gegen den Innenmantel (31) verspannbares Druckstück (72) aufweist, wobei die Vorspanneinrichtung (7) eine mit dem Druckstück (72) zusammenwirkende Führungseinrichtung aufweist, zur linearen Führung des Innenmantels (31) relativ zum Außenmantel (33) in Richtung der Längsachse (L), wobei die Führungseinrichtung in Umfangsrichtung wirksame Formschlusselemente (36, 721, 722, 723) aufweist, wobei die Führungseinrichtung ein erstes Führungselement (36) am Innenmantel (31) aufweist, und ein damit korrespondierendes zweites Führungselement (72, 721, 722, 723) an dem Druckstück (72), welches an dem ersten Führungselement (36) in Richtung der Längsachse (L) bewegbar geführt ist,
**dadurch gekennzeichnet,**
**dass** die Führungselemente eine einstückig durch plastische Umformung in den Innenmantel (31) oder den Außenmantel (33) eingeformte, als sickenförmige Vertiefung ausgebildete Führungsnut (36) und einen darin eingreifenden Führungsvorsprung (72, 721, 722, 723) umfassen.

2. Lenksäule nach Anspruch 1, **dadurch gekennzeichnet, dass** dass die Führungselemente eine Gleitschiene (36) und ein darin gleitend geführtes Gleitstück (72, 721, 722, 723) umfassen.

3. Lenksäule nach Anspruch 1 oder 2, **dadurch gekennzeichnet, dass** die Führungselemente quer zur Längsachse (L) keilförmig zusammenlaufende Seitenflanken (721, 722) aufweisen.

4. Lenksäule nach einem der vorangehenden Ansprüche, **dadurch gekennzeichnet, dass** die Führungseinrichtung zumindest teilweise reibungsmindernd ausgestaltet ist.

5. Lenksäule nach einem der vorangehenden Ansprüche, **dadurch gekennzeichnet, dass** die Vorspanneinrichtung (7) einstellbar ist.

6. Lenksäule nach Anspruch 5, **dadurch gekennzeichnet, dass** die Vorspanneinrichtung (7) in einer vorgegebenen Einstellposition festlegbar ist.

7. Lenksäule nach einem der vorangehenden Ansprüche, **dadurch gekennzeichnet, dass** die Vorspanneinrichtung (7) ein Federelement (73) aufweist.

## Claims

1. Motor-adjustable steering column (1) for a motor vehicle, comprising a casing unit (3) in which a steering spindle (30) can be mounted so as to rotate about a longitudinal axis (L), and which has an inner casing (31) which can be telescoped relative to an outer casing (33) in the direction of the longitudinal axis (L) and is arranged in the outer casing (33), and a motor-adjustment drive (6) which is coupled to the inner casing (31) and the outer casing (33)
wherein a pretensioning device (7) is provided, which has a pressure piece (72) supported on the outer casing (33) and braceable against the inner casing (31), wherein the pretensioning device (7) has a guide device cooperating with the pressure piece (72) for linear guidance of the inner casing (31) relative to the outer casing (33) in the direction of the longitudinal axis (L), wherein the guide device has positive-locking elements (36, 721, 722, 723), the guide device having a first guide element (36) on the inner casing (31), and a second guide element (72, 721, 722, 723) corresponding thereto on the pressure piece (72), which is guided on the first guide element (36) so as to be movable in the direction of the longitudinal axis (L)
**characterized in**
**in that** the guide elements comprise a guide groove (36) formed in one piece by plastic deformation into the inner casing (31) or the outer casing (33) and designed as a bead-shaped depression, and a guide projection (72, 721, 722, 723) engaging therein.

2. Steering column according to claim 1, **characterized in that** the guide elements comprise a slide rail (36) and a slide piece (72, 721, 722, 723) slidingly guided therein.

3. Steering column according to claim 1 or 2, **characterized in that** the guide elements have wedge-shaped converging side flanks (721, 722) transverse to the longitudinal axis (L).

4. Steering column according to one of the preceding claims, **characterized in that** the guide device is at least partially designed to reduce friction.

5. Steering column according to one of the preceding claims, **characterized in that** the pretensioning device (7) is adjustable.

6. Steering column according to claim 5, **characterized in that** the pretensioning device (7) can be fixed in a predetermined setting position.

7. Steering column according to one of the preceding claims, **characterized in that** the pretensioning device (7) has a spring element (73).

## Revendications

1. Colonne de direction (1) réglable par moteur pour un véhicule automobile, comprenant une unité d'enveloppe (3) dans laquelle un arbre de direction (30) peut être logé en rotation autour d'un axe longitudinal (L), et qui présente une enveloppe intérieure (31) disposée dans l'enveloppe extérieure (33) et télescopique par rapport à une enveloppe extérieure (33) dans la direction de l'axe longitudinal (L), et un entraînement de réglage (6) motorisé qui est couplé à l'enveloppe intérieure (31) et à l'enveloppe extérieure (33)
un dispositif de précontrainte (7) étant prévu, lequel présente une pièce de pression (72) appuyée sur l'enveloppe extérieure (33) et pouvant être serrée contre l'enveloppe intérieure (31),
le dispositif de précontrainte (7) présentant un dispositif de guidage coopérant avec la pièce de pression (72), pour le guidage linéaire de l'enveloppe intérieure (31) par rapport à l'enveloppe extérieure (33) dans la direction de l'axe longitudinal (L), le dispositif de guidage présentant des éléments à engagement positif (36, 721, 722, 723), le dispositif de guidage présentant un premier élément de guidage (36) sur l'enveloppe intérieure (31), et un deuxième élément de guidage (72, 721, 722, 723) correspondant à celui-ci sur la pièce de pression (72), qui est guidée de manière mobile sur le premier élément de guidage (36) dans la direction de l'axe longitudinal (L)
**caractérisé en ce que**
**en ce que** les éléments de guidage comprennent une rainure de guidage (36) formée d'un seul tenant par déformation plastique dans l'enveloppe intérieure (31) ou l'enveloppe extérieure (33) et réalisée sous la forme d'un renfoncement en forme de moulure, et une saillie de guidage (72, 721, 722, 723) qui s'y engage.

2. Colonne de direction selon la revendication 1, **caractérisée en ce que** les éléments de guidage comprennent une glissière (36) et une pièce coulissante (72, 721, 722, 723) guidée de manière coulissante dans celle-ci.

3. Colonne de direction selon la revendication 1 ou 2, **caractérisée en ce que** les éléments de guidage présentent des flancs latéraux (721, 722) convergeant en forme de coin transversalement à l'axe longitudinal (L).

4. Colonne de direction selon l'une des revendications précédentes, **caractérisée en ce que** le dispositif de guidage est conçu de manière à réduire au moins partiellement la friction.

5. Colonne de direction selon l'une des revendications précédentes, **caractérisée en ce que** le dispositif de précontrainte (7) est réglable.

6. Colonne de direction selon la revendication 5, **caractérisée en ce que** le dispositif de précontrainte (7) peut être fixé dans une position de réglage prédéfinie.

7. Colonne de direction selon l'une des revendications précédentes, **caractérisée en ce que** le dispositif de précontrainte (7) comporte un élément de ressort (73).
